# EUROPEAN PATENT APPLICATION

(11) **EP 4 336 177 A1**
(43) Date of publication of application: **13.03.2024**
(21) Application number: 22194145.3
(22) Date of filing: 06.09.2022
(51) Int. Cl.: G01N 27/30

(54) **POLYMER BASED SOLID-STATE ELECTROLYTE (SSE) FOR DEPOSITION ON AN AG/AGCL REFERENCE ELECTRODE**

(71) Applicant: InnoME GmbH, 32339 Espelkamp (DE)
(72) Inventor: Kottkamp, Eike, 32312 Lübbecke (DE); Harris, Tomos, 12043 Berlin (DE)
(74) Representative: Maikowski & Ninnemann Patentanwälte Partnerschaft mbB

(57) **Abstract**

Solid-state electrolyte (SSE) for deposition on a Ag/AgCl reference electrode comprising a polymer matrix made of a curable, preferably acrylic, polymer, at least one alkali chloride as internal electrolyte for the reference electrode, at least one amphiphilic filler material, preferable a plate-like filler material, more preferably talc and at least one organic solvent, preferably a group containing glycols, wherein the at least one alkali chloride, the at least one amphiphilic filler material and the at least one organic solvent are embedded in the polymer matrix. A reference electrode comprising said SSE is also defined.

## Description

The present invention relates to a solid-state electrolyte (SSE) for deposition on a silver / silver chloride reference electrode and a reference electrode comprising such a solid-state electrolyte.

### Description

Electroanalytical techniques, such as potentiometry and amperometry, are attractive tool for many practical applications. They can also be carried out with portable equipment. These techniques are in particular useful for medical and environmental tests. Low-cost and small-size disposable electrode systems are desirable for these applications.

A reference is necessary to complete an electrochemical cell. Reference electrodes (RE's) are core components of electrochemical sensors providing a stable reference potential (E) against which measurements are done.

The Ag/AgCI reference electrode is widely used in electrochemical measurements. They provide a stable electrical potential E and are safe for handling. The electrical potential E depends on the chloride activity / concentration. This is usually maintained using an internal solution of chloride separated from the analyte solution with a porous membrane (e.g. a glass frit). Commercial Ag/AgCI reference electrodes consist of a Ag/AgCI wire immersed in saturated or 3 M KCI solution contained in a glass tube with a porous ceramic or glass liquid junction that separates the mentioned constituents from the analyzed solution. Although commercial Ag/AgCI reference electrodes are easy to use, they are rather voluminous and rigid. This has caused the development of small flexible Ag/AgCl reference electrodes for use in integrated sensors and analysis systems.

One hurdle to be taken when miniaturize Ag/AgCl reference electrodes is that the chloride concentration [CI-] can vary in different media and from sample to sample. However, for most applications it is highly desirable to have a constant [CI-] concentration. In order to obtain a constant chloride concentration in in printed/foil/wearable/flexible sensors, a solid-state electrolyte (SSE) is usually deposited on the Ag/AgCl electrode. Typical examples for such a SSE comprise a polymer matrix / polymer gel with KCI deposited in said polymer. Upon contact with fluid (such as the fluid that should be analysed), this layer becomes wetted (i.e. activated), and the time taken for this to occur (and for the impedance to reduce sufficiently to give a stable reference potential E) is known as the set-up time. It is desired that upon wetting (i.e. activation) of such SSE sensors the chloride concentration should remain constant at the Ag/AgCl electrode.

As mentioned, solid-state reference electrodes can consist of chloride salt (e.g. KCI) embedded in a polymeric matrix or gel. Here, KCI is dissolved in a polymeric matrix or gel, or KCI particles are embedded in a polymeric matrix or KCI is dissolved in the gel. When used, the SSE is activated by wetting (for example by dipping the sensor into a fluid to be analysed). In contact with an analyte a concentrated layer of KCI is maintained for a certain time period, either due to slow diffusion of KCI out of the SSE or due to continuous dissolution of KCI particles in the polymeric matrix which replenish and maintain the KCI concentration. When KCI leaches out of the SSE too quick, the concentration of chloride decreases quickly, and electrical potential E drifts and causes a short lifetime of the reference electrode.

In order to increase the lifetime of a reference electrode it is possible to increase the KCI loading or matrices can be used that lead to slower diffusion of KCI out of SSE. This approach has the disadvantage that the impedance of the electrode is increased and long set-up times; i.e. time taken for complete activation/hydration/stabilisation of SSE and therefore stable E output, occur.

One way to improve the performance would be to optimise the hydrophobic-hydrophilic balance and achieve low impedance and high electrochemical stability, while also maintaining high structural stability, which in turn would provide a long life-time and allow high loading of KCI.. This can be achieved for example through cross-linking the polymer, either using thermally-activated curing or light-activated curing (e.g. UV-curing). However, thermal curing is difficult to control. Furthermore, when using water based thermally cured resins, such as melamine, KCI dissolves and thus the KCI loading is limited.

It was thus a technical object of the present invention to provide a solid-state electrolyte and a reference electrode that circumvents the above problems. It was in particular the object of the present invention to provide a sensor with increased stability, that shows no or only limited leaking out of alkalic chloride, but can be wetted in a fast manner due to optimized water uptake and diffusion.

This object has been solved by providing a solid-state electrolyte according to claim 1 and a reference electrode according to claim 10.

Accordingly, a solid-state electrolyte (SSE) for deposition on an Ag/AgCl reference electrode is provided that comprises
- a polymer matrix made of a curable polymer,
- at least one alkali chloride, in particular Potassium chloride, as internal electrolyte for the reference electrode,
- at least one amphiphilic mineral filler, and
- at least one organic solvent,
   Wherein the at least one alkali chloride, the at least one amphiphilic filler material and the at least one organic solvent are embedded in the polymer matrix.

The solid-state electrolyte (SSE) of the invention comprises a suitable polymer, a mineral filler material, a chloride salt as electrolyte and an organic solvent for at least partially dissolving the polymer and for wetting the mineral filler. The filler material is also at least partially wetted by the thermoset polymer (so has hydrophobic surfaces or low polarity) to allow dispersion in polymer. The solvent's vapour pressure properties are used to control the porosity of the resulting layer. Preferably, a low-vapour pressure solvent is used which does not evaporate before curing of the polymer.

Solvent volume, type and KCI to polymer ratio were varied to optimise performance and to prevent cracking/delamination of layer upon drying (after curing).

In an embodiment the solid-state electrolyte comprises
- 20-70 wt%, preferably 30-50wt%, more preferably 35-45 wt% of the polymer matrix made of a curable polymer,
- 10-50 wt%, preferably 20-40wt%, more preferably 25-35wt% of the at least one alkali chloride,
   1-50 wt%, preferably 5-40wt%, more preferably 10-30wt% of the at least one organic solvent, and the balance of the at least one amphiphilic mineral filler to add up to 100wt%.

In a preferred embodiment the solid-state electrolyte comprises
- 20-60 wt% of the polymer matrix made of a curable polymer,
- 10-50 wt% of the at least one alkali chloride,
- 2-50 wt% of the at least one organic solvent, and
- the balance of the at least one amphiphilic mineral filler to add up to 100wt%.

In a more preferred embodiment the solid-state electrolyte comprises
- 30-50wt% of the polymer matrix made of a curable polymer,
- 20-40wt% of the at least one alkali chloride,
- 5-40wt% of the at least one organic solvent, and
- the balance of the at least one amphiphilic mineral filler to add up to 100wt%.

In an even more embodiment the solid-state electrolyte comprises
- 35-45 wt% of the polymer matrix made of a curable polymer,
- 25-35wt% of the at least one alkali chloride,
- 10-30wt% of the at least one organic solvent, and
- the balance of the at least one amphiphilic mineral filler to add up to 100wt%.

### Polymer

In an embodiment of the solid-state electrolyte, the polymer matrix is made of a UV-curable polymer, in particular an acrylic polymer, or a thermocurable resin.

The polymer matrix is made preferably of a homopolymer or copolymer with a monomer selected from one of methacrylate, methyl acrylate, methyl methacrylate, ethyl acrylate, ethyl methacrylate, propyl acrylate, butyl acrylate, pentyl acrylate, hexyl acrylate, heptyl acrylate.

The polymer matrix may also be made of polyvinylacrylate (PVA), epoxyacrylate, Polyhydroxyethylmethacrylate (pHEMA) or any other epoxy polymers,

Possible thermocurable polymer may be polyvinyl chloride (PVC), polyurethane, polyvinylchloride carboxylated copolymer, Carboxylated polyvinylchloride, polyvinylacatete (PVAc), polyvinylbutyral (PVB), polyvinylpyrrolidone (PVP), PDMS, silicone rubber.

### Filler material

Mineral fillers are typically impermeable and are added to polymers to reduce their permeability to gasses and liquids.

The filler material used in the present case is preferably amphipilic with hydrophobic and hydrophilic properties.

The hydrophilic sites promote water vapour adsorption in the pores or on the surface of the filler material and capillary condensation what in turn promotes a rapid hydration of the filler material in low moisture environments (e.g. damp soil). The hydrophobic regions promote integration of the filler material with the polymer matrix, interact with organic solvent during synthesis providing a stable and continuous porous structure, which in turn regulates leaching of KCI, and thus promotes a long lifetime.

Furthermore, the filler material ideally has a high aspect ratio to form stable dispersion), is preferably platelet like with long diffusion pathways, is applicable for screen printing and should not swell in water.

In an embodiment of the solid-state electrolyte, the at least one amphiphilic filler material is a plate-like filler material selected from one of silicates, clay material, micas (e.g. Muscovite and phlogopite), talc, nanoclays, glass flakes, calcium carbonates, wollastonite.

Talc may be a preferred filler material due to its specific structure. The edge sites of talc are hydrophilic that promote a fast penetration of water and thus fast hydration of solid electrolyte layer; promote water condensation, forms capillaries in materials leading to rapid hydration of electrolyte layer.

It is also possible to use functionalised filler material: i.e. hydrophilic or amphiphilic material whose surfaces have been modified (e.g. with silanes or stearates/fatty acids) to render them hydrophobic. This includes but is not limited to fillers such as silicas (e.g. fumed silicas). The extent of modification/functionalisation can be controlled to have pockets of hydrophilic sites.

In a further embodiment of the present solid-state electrolyte, the at least one filler material has a particle size between 1 and 100 µm, preferably between 10 and 80 µm, more preferably between 20 and 50 µm, even more preferably between 30 and 40 µm. A size smaller than 30 µm allows for a compatibility with screen printing. The filler material may have a particle size of d98 of 15-30 µm, preferably of 20-25 µm, such as 24 µm. The filler material may have a particle size of d50 of 1-15 µm, preferably of 5-10 µm.

In yet another embodiment, the filler material has a BET area in a range between 1 and 10 m²/g, preferably between 2 and 8 m²/g, even more preferably between 3 and 7 m²/g, such as 5 m²/g. The BET is typically determined according to ISO 4652.

The tappend density of the filler material may be 0.5-1.5 g/cm³, preferably 0.7-1.2 g/cm³, more preferably 0.8-1.0 g/cm³, such as 0.9 g/cm³. The bulked density of the filler material may be 0.1-1.0 g/cm³, preferably 0.3-0.8 g/cm³, more preferably 0.5-0.7 g/cm³, such as 0.6 g/cm³. The tappened density is determined according to ISO 787/11, the bulk density is determined according to DIN 53468.

### Organic solvent

Organic solvent provides a coating around the filler particles and prevents binding of polymer to the filler material. The organic solvent preferably has a low polarity and a high boiling point. A solvent with low polarity allows for solving the polymer as well as for wetting the filler material.

As mentioned previously, a low-vapour pressure organic solvent is used which does not evaporate before curing of the polymer. After and during curing, the solvent evaporates causing a shrinkage of polymer. Subsequently, the cured polymer delaminates from the filler. This process is aided by wetting and subsequent evaporation of solvent on surface of the filler. This results in a microporous structure that allows rapid wetting of the SSE and water/ion diffusion through the layer.

A suitable organic solvent is selected from a group containing glycols, i.e., Propylene Glycol Methyl Ether, Dipropylene Glycol Methyl Ether, Tripropylene Glycol Methyl Ether, Propylene Glycol Methyl Ether Acetate, Dipropylene Glycol Methyl Ether Acetate, Propylene Glycol n-Propyl Ether, Dipropylene Glycol n-Propyl Ether, Propylene Glycol n-Butyl Ether, Dipropylene Glycol n-Butyl Ether, Tripropylene Glycol n-Butyl Ether, Propylene Glycol Phenyl Ether, Dipropylene Glycol Phenyl Ether, Propylene Glycol Diacetate, Bis-dipropylene Glycol n-Butyl, Ether Adipate, Dipropylene Glycol Dimethyl Ether, Diethylene Glycol Methyl Ether, Triethylene Glycol Methyl Ether, Diethylene Glycol Ethyl Ether, Triethylene Glycol Ethyl Ether, Ethylene Glycol Propyl Ether, Ethylene Glycol n-Butyl Ether, Diethylene Glycol n-Butyl Ether, Triethylene Glycol n-Butyl Ether, Ethylene Glycol n-Butyl Ether Acetate, Diethylene Glycol n-Butyl Ether Acetate, Ethylene Glycol Hexyl Ether, Diethylene Glycol Hexyl Ether, Ethylene Glycol Phenyl Ether, Diethylene Glycol Phenyl Ether, Poly(oxy-1,2-ethanediyl), alpha-phenyl-omega-hydroxy, Ethylene Glycol Phenyl Ether. Alkyl glycol ethers and alkylene glycol ethers are preferred.

In reverse, high vapour pressure solvents are not applicable. High vapour pressure solvents evaporate fast at room temperature / on the screen before curing can take place, which results in a dense, non-porous structure being formed which does not facilitate capillary condensation and water/ion diffusion through the layer, and leads to a completely insulating layer or very long set-up times for activation/wetting. This has the same effect as if no solvent is added to the paste.

### Alkali chloride

In an embodiment of the presensolid-state electrolyte, the at least one alkali chloride is sodium chloride (NaCI) or potassium chloride (KCI).

The at least one alkali chloride has preferably a particle size of less than 30 µm. The particle size of the at least one alkali chloride may be in a range between 1 and 30 µm, preferably between 5 and 20 µm, more preferably between 8 and 15 µm, even more preferably between 8 and 10 µm.

The particle size of 30 µm or less allows a stable suspension that is screen printable.

In one preferred embodiment, KCI is grounded to obtain monodisperse particles with a particle size 8-10 µm. This is achieved by dispersing KCI in an organic solvent, in particular isopropanol, for example with a KCI loading of 30-50 wt%, and subsequent milling, for example ball milling. This suspension of stabilised, small KCI particles could then be directly combined with the UV curable paste - leading to simultaneous dilution of paste and addition (i.e. loading) of small, monodisperse KCI particles.

As previously mentioned, the object of the invention is also solve by a reference electrode.

Accordingly, a polymeric reference electrode is provided that comprises
- at least one substrate,
- at least one Ag/AgCl electrode arranged on the substrate; and
- a solid-state electrolyte (SSE) as previously defined.

The substate may be a polymer foil or film, for example a polyethylenterephthalat (PET). However, the substrate could also be any other solid material, such as a ceramic substrate, glass or even woven fabrics.

It is to be understood that the polymeric substrate comprises conduction lines arranged on the substrate being in contact with the Ag/AgCl electrode and an insulation layer (for example polyethylennaphthalate PEN) covering the conduction lines.

In a first embodiment, the polymeric reference electrode has the following setup:
- at least one substrate, in particular a PET foil;
- at least one Ag/AgCl electrode arranged on the substrate;
- a solid-state electrolyte (SSE) as previously defined disposed on the at least one Ag/AgCl electrode, and
- at least one semipermeable polymer layer covering the solid-state electrolyte.

The solid-state electrolyte is printed and cured on the at least one Ag/AgCl electrode. Subsequently, the SSE is encapsulated or laminated with the semipermeable polymer.

The semipermeable polymer provides a coating or encapsulation of the solid -state electrolyte. The semipermeable polymer may be comprise or be made of polydimethylsiloxane PDMS or any suitable thermoset polymer. The thermoset polymer, such as a polyurethane, polyester, vinylester or acrylate, may also contain a filler material as previously described and a solvent. In the latter case the filler material and the solvent may be the same as used in the SSE.

In a second embodiment, the polymeric reference electrode has the following setup:
- substrate, in particular a PET foil;
- at least one Ag/AgCl electrode arranged on the substrate;
- a solid-state electrolyte (SSE) as previously defined disposed on the at least one Ag/AgCl electrode, and
- at least one non-permeable foil with a circular opening covering the solid-state electrolyte.

The solid-state electrolyte is printed and cured on the at least one Ag/AgCl electrode. Subsequently, the SSE is encapsulated or laminated with the non-permeable foil. The circular opening is introduced into the non-permeable foil by laser cutting.

The non-permeable foil with a circular opening or hole (lasercut) that is arranged or disposed on the solid-state electrolyte and provides at least as a partial encapsulation functions as a liquid junction of the reference electrode. The non-permeable foil is preferably made of the same material as the insulation material, for example polyethylennapthalate PEN, but could also be a screen printed insulation layer, such as an impermeable thermoset epoxy.

In a third embodiment, the polymeric reference electrode has the following setup:
- substrate, in particular a PET foil;
- at least one Ag/AgCl electrode arranged on the substrate; and
- a solid-state electrolyte (SSE) as previously defined disposed on the at least one Ag/AgCl electrode.

The solid-state electrolyte is printed and cured on the at least one Ag/AgCl electrode that has been already provided with an insulation layer.

The polymeric reference electrode as described may be used in potentiometric measurements of one or more parameters in a physiological fluid, such as blood.

The polymeric reference electrode may also be part of a sensor-based board. Such a sensor-based board may comprise one or more measuring sensors and a polymeric reference electrode disposed on an inert support material.

One or more measuring sensors of said board are selective towards one or more parameters selected from the group of pH, pCO₂, pO₂, electrolytes, such as Li⁺, Na⁺, K⁺, Ca²⁺, Mg²⁺, Cl⁻, HCO³⁻, NH₄⁺, haemoglobin, hematocrit (Hct), and metabolites such as bilirubin, glucose, lactate, urea, creatine.

The invention is now explained in more detail by means of examples with reference to the figures. It shows:
- Figure 1: a schematic illustration of capillary wetting mechanism;
- Figure 2: a schematic illustration of different SSE compositions;
- Figure 3 A,B: a first embodiment of the polymeric reference electrode according to the invention (A) and diagram illustrating the stability of the electrode (B);
- Figure 4 A,B: a second embodiment of the polymeric reference electrode according to the invention and diagram illustrating the stability of the electrode (B); and
- Figure 5 A,C: a third embodiment of the polymeric reference electrode according to the invention and diagram illustrating the stability of the electrode (B);

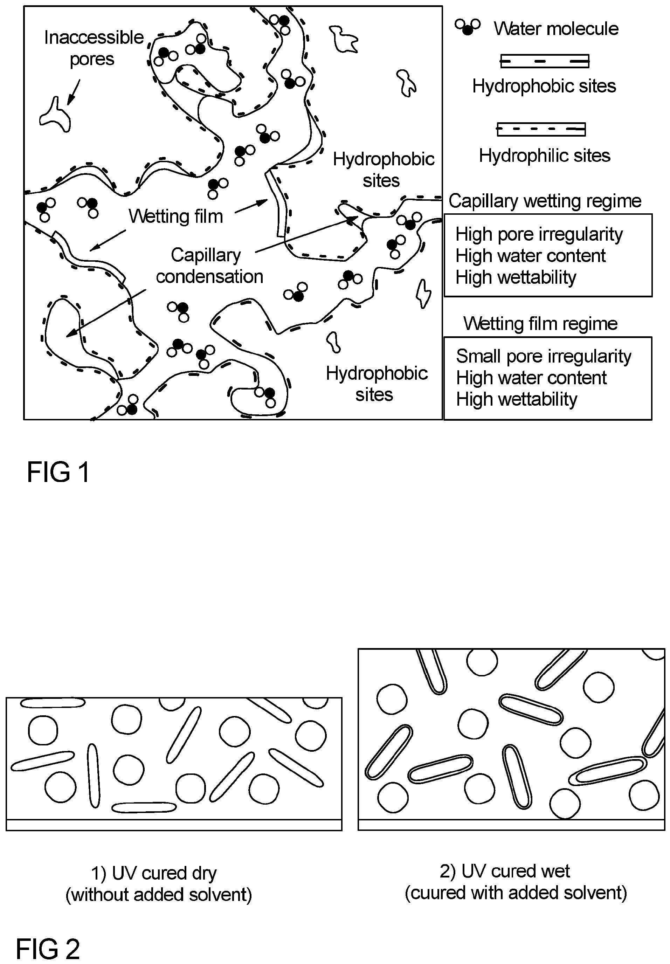

Figure 1 illustrates the capillary wetting mechanism of mesoporous materials with exposed hydrophobic and hydrophilics areas. Typical mesporous materailas are mineral fillers, such as talc particles.

Figure 2 illustrates different SSE composition. The left scheme (1) shows a SSE composition consisting of a polymer and KCI particles (round) and talc particles (elongated) embedded within the polymer. No organic solvent is added, or a high vapour pressure solvent is used that evaporates before curing can take place. After UV-curing the SSE of scheme (1) shows only a slow H₂O diffusion/long set-up times.

The SSE composition (according to the invention) shown in the middle scheme (2) differs from (1) in that solvent with a sufficiently low vapour pressure was added in addition to polymer, KCI particles and talc particle organic. As indicated in scheme (2) the organic solvent forms a coating in particular around the talc particles. The SSE composition of (2) has - after curing - an optimized water uptake/diffusion.

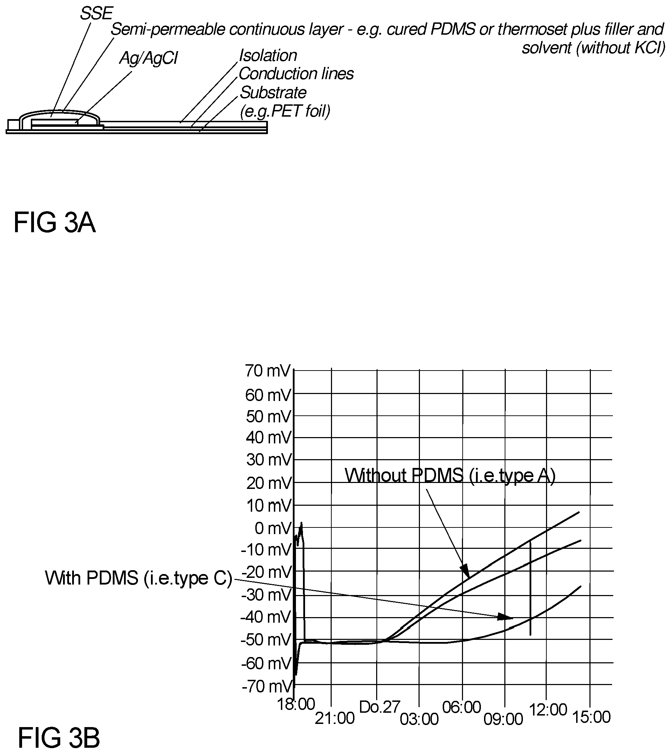

### Example 1: 1st embodiment as shown in Fig. 3A,B

It is to be understood that the polymeric substrate of all examples comprises conduction lines arranged on the substrate being in contact with the Ag/AgCl electrode and an insulation layer (for example polyethylennapthalat PEN) covering the conduction lines.

The polymeric reference electrode has the following setup: a PET foil as substrate; Ag/AgCl electrode arranged on the substrate; a solid-state electrolyte comprising polymer, talc as filler material, KCI (8 µm) and organic solvent. A semipermeable polymer layer made of PDMS covers the solid-state electrolyte.

The talc used as filler material has the following specification:
Particle size: Top cut D98: 24 µm, D50: 10.5 µm, Fineness of grind 4 µm
Specific surface area: BET 5 m2/g
Specific gravity 2.77
Tapped density: 0.9 g/cm3
Bulk density 0.6 g/cm3

The lifetime of this electrode setup is depicted in the diagram of Fig. 3B. As can be seen, the lifetime of this setup with a semipermeable polymer coating is almost twice the lifetime of a setup as described in the third embodiment without any semipermeable polymer coating.

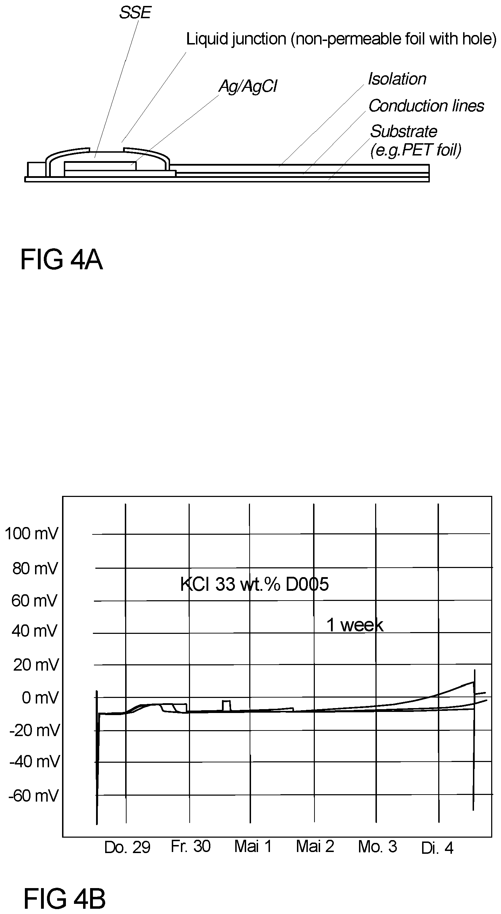

### Example 2: 2nd embodiment as shown in Fig. 4A,B

The polymeric reference electrode has the following setup: a PET foil as substrate; Ag/AgCl electrode arranged on the substrate; a solid-state electrolyte comprising polymer, talc as filler material (see above), KCI (8 µm) and organic solvent. A non-permeable PEN foil with a circular opening covers the solid-state electrolyte, which acts as a liquid junction.

The solid-state electrolyte is printed and cured on the at least one Ag/AgCl electrode. Subsequently, the SSE is encapsulated or laminated with the non-permeable foil. The circular opening is introduced into the non-permeable foil by laser cutting. A non-permeable layer with a hole may also be printed on the SSE instead of a non-permeable foil, for example a screen printed non-permeable cured epoxy.

This electrode setup has a Fast set-up time (stable after 30 min), Max 6 mV change in potential from 0 to 150 mM chloride, Stable in pH 4 to 10 (at least). It shows an exceptional long term stability and functions in non-liquid substrates (such as moist soil, without prior soaking/activation in liquid). The Set-up time eliminated when exposed to high relative humidity. The lifetime of this set-up may be an order of magnitude higher than a setup as described in the third embodiment without any non-permeable polymer or printed dielectric coating.

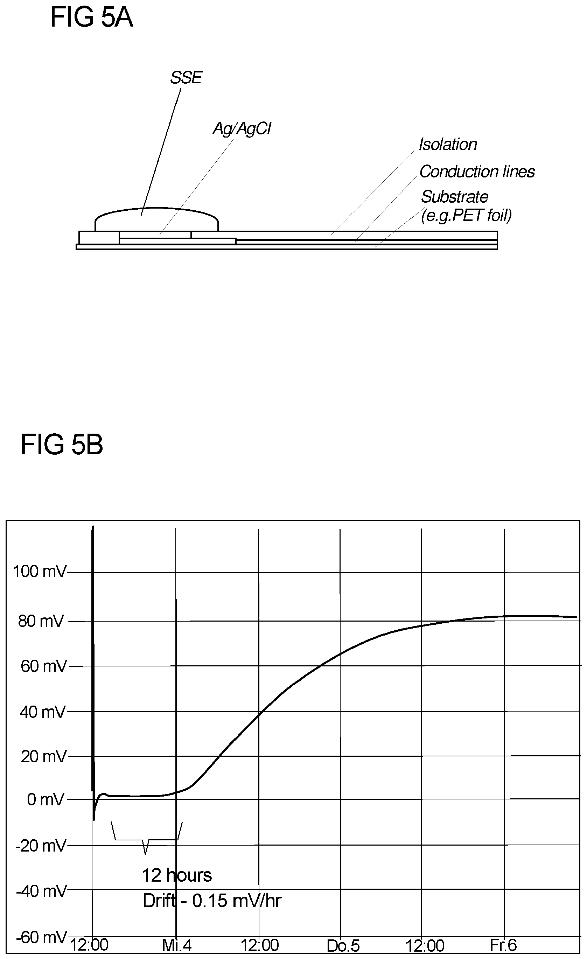

### Example 3: 3rd embodiment as shown in Fig. 5A,B

The polymeric reference electrode has the following setup: a PET foil as substrate; Ag/AgCl electrode arranged on the substrate; a solid-state electrolyte comprising polymer, talc as filler material (see above), KCI (8 µm) and organic solvent

The solid-state electrolyte is printed and cured on the at least one Ag/AgCl electrode. The SSE is not encapsulated or laminated with any additional layer or polymer or foil.

The SSE was printed and cured on already insulated Ag/AgCl (insulation - PEN lamination film). The electrode shows a Rapid setup time when inserted into buffer and Gives stable E for around 12 hours before drift increases significantly (see diagram of Fig. 5B), which compromises the lowest lifetime of all three setups.

## Claims

1. A solid-state electrolyte (SSE) for deposition on a Ag/AgCl reference electrode comprising
- a polymer matrix made of a curable polymer,
- at least one alkali chloride as internal electrolyte for the reference electrode,
- at least one amphiphilic filler material, and
- at least one organic solvent,
wherein the at least one alkali chloride, the at least one amphiphilic filler material and the at least one organic solvent are embedded in the polymer matrix..

2. Solid-state electrolyte according to claim 1, **characterized in that** the electrolyte comprises:
- 20-70 wt%, preferably 30-50wt%, more preferably 35-45 wt% of the polymer matrix made of a curable polymer,
- 10-50 wt%, preferably 20-40wt%, more preferably 25-35wt% of the at least one alkali chloride,
- 1-50 wt%, preferably 5-40wt%, more preferably 10-30wt% of the at least one organic solvent, and
- the balance of the at least one amphiphilic mineral filler to add up to 100wt%.

3. Solid-state electrolyte according to one of the preceding claims, **characterized in that** the polymer matrix is made of a UV-curable polymer, in particular an acrylic polymer, or a thermocurable resin.

4. Solid-state electrolyte according to one of the preceding claims, **characterized in that** the polymer matrix is made of a homopolymer or copolymer with a monomer selected from one of methacrylate, methyl acrylate, methyl methacrylate, ethyl acrylate, ethyl methacrylate, propyl acrylate, butyl acrylate, pentyl acrylate, hexyl acrylate, heptyl acrylate.

5. Solid-state electrolyte according to one of the preceding claims, **characterized in that** the at least one amphiphilic filler material is a plate-like filler material selected from one of silicates, clay material, micas (e.g. Muscovite and phlogopite), talc, nanoclays, glass flakes, calcium carbonates, wollastonite.

6. Solid-state electrolyte according to one of the preceding claims, **characterized in that** the at least one filler material has a particle size between 1 and 100 µm, preferably between 10 and 80 µm, more preferably between 20 and 50 µm, even more preferably between 30 and 40 µm.

7. Solid-state electrolyte according to one of the preceding claims, **characterized in that** the at least one organic solvent is selected from a group containing glycols, in particular one of the following: Propylene Glycol Methyl Ether, Dipropylene Glycol Methyl Ether, Tripropylene Glycol Methyl Ether, Propylene Glycol Methyl Ether Acetate, Dipropylene Glycol Methyl Ether Acetate, Propylene Glycol n-Propyl Ether, Dipropylene Glycol n-Propyl Ether, Propylene Glycol n-Butyl Ether, Dipropylene Glycol n-Butyl Ether, Tripropylene Glycol n-Butyl Ether, Propylene Glycol Phenyl Ether, Dipropylene Glycol Phenyl Ether, Propylene Glycol Diacetate, Bis-dipropylene Glycol n-Butyl, Ether Adipate, Dipropylene Glycol Dimethyl Ether, Diethylene Glycol Methyl Ether, Triethylene Glycol Methyl Ether, Diethylene Glycol Ethyl Ether, Triethylene Glycol Ethyl Ether, Ethylene Glycol Propyl Ether, Ethylene Glycol n-Butyl Ether, Diethylene Glycol n-Butyl Ether, Triethylene Glycol n-Butyl Ether, Ethylene Glycol n-Butyl Ether Acetate, Diethylene Glycol n-Butyl Ether Acetate, Ethylene Glycol Hexyl Ether, Diethylene Glycol Hexyl Ether, Ethylene Glycol Phenyl Ether, Diethylene Glycol Phenyl Ether, Poly(oxy-1,2-ethanediyl), alpha-phenyl-omega-hydroxy, Ethylene Glycol Phenyl Ether.

8. Solid-state electrolyte according to one of the preceding claims, **characterized in that** the at least one alkali chloride is sodium chloride (NaCI) or potassium chloride (KCI).

9. Solid-state electrolyte according to one of the preceding claims, **characterized in that** the at least one alkali chloride has a particle size of less than 30 µm.

10. A polymeric reference electrode comprising
- substrate,
- at least one Ag/AgCl electrode arranged on the substrate; and
- a solid-state electrolyte (SSE) according to one of the preceding claims 1-9.

11. Polymeric reference electrode according to claim 10, **characterized by** the following setup:
- substrate, in particular a PET foil;
- at least one Ag/AgCl electrode arranged on the substrate;
- a solid-state electrolyte according to one of the claims 1-9 disposed on the at least one Ag/AgCl electrode, and
- at least one semipermeable polymer layer covering the solid-state electrolyte.

12. Polymeric reference electrode according to claim 10, **characterized by** the following setup:
- substrate, in particular a PET foil;
- at least one Ag/AgCl electrode arranged on the substrate;
- a solid-state electrolyte according to one of the claims 1-9 disposed on the at least one Ag/AgCl electrode, and
- at least one non-permeable foil or printed layer with a circular opening covering the solid-state electrolyte.

13. Polymeric reference electrode according to claim 10, **characterized by** the following setup:
- substrate, in particular a PET foil;
- at least one Ag/AgCl electrode arranged on the substrate; and
- a solid-state electrolyte according to one of the claims 1-9 disposed on the at least one Ag/AgCl electrode.

14. Use of a polymeric reference electrode according to one of the claims 1013 in potentiometric measurements of one or more parameters in a physiological fluid, such as blood.

15. A sensor based board comprising one or more measuring sensors and a polymeric reference electrode according to one of the claims 10-13 disposed on an inert support material.
